# EUROPEAN PATENT APPLICATION

(11) **EP 4 245 131 A1**
(43) Date of publication of application: **20.09.2023**
(21) Application number: 20961626.7
(22) Date of filing: 13.11.2020
(51) Int. Cl.: A01K 1/00

(54) **LIQUID DISPERSION FOR ENVIRONMENT IMPROVEMENT USE, AND METHOD FOR IMPROVING ENVIRONMENT**

(71) Applicant: Chuetsu-Pulp and Paper Co., Ltd, Takaoka-shi, Toyama 933-8533 (JP)
(72) Inventor: NAGATA Kenji, Takaoka-shi Toyama 933-8533 (JP); FUSE Yoshitaka, Takaoka-shi Toyama 933-8533 (JP); HAYASHI Yui, Takaoka-shi Toyama 933-8533 (JP)
(74) Representative: Murgitroyd & Company
(86) International application number: PCT/JP2020/042493
(87) International publication number: WO 2022/102098

(57) **Abstract**

[Problem to be Solved]

The present invention provides a dispersion for environmental improvement that can easily create a growing environment for livestock and other animals and can improve a working environment for employees.

[Solution]

The present invention uses a dispersion comprising ultrafine fiber including microfiber that has a fiber width on the order of micrometer and/or nanofiber that has a fiber width on the order of nanometer to collect dust particles in livestock houses and immobilize insect pests such as mites in place to facilitate cleaning and other operations by utilizing the properties of the ultrafine fibers, such as shrinking of the ultrafine fibers or forming of an ultrathin film in the process of drying the dispersion.

## Description

### Technical Field

The present invention relates to a dispersion comprising ultrafine fibers used to improve the environment of livestock houses and a method of improving the environment using the dispersion.

### Background Art

Livestock houses, which are buildings for housing, raising, and growing livestock, have two roles: to improve the efficiency of livestock management and to protect livestock from natural weather conditions. Examples of animals currently used as livestock can include cattle, dairy cows, pigs, horses, dogs, sheep, goats, domesticated insects, and poultry such as birds. From the viewpoint of efficient livestock management, various requirements for raising livestock must be met, including environmental friendliness, workability, economic efficiency, safety, and social friendliness. From the viewpoint of environmental friendliness, workability, and others of livestock houses, the environment inside livestock houses should be as clean as possible, and such a clean environment should be easily maintained.

In addition, livestock farming management depends on the productivity of livestock and the quality of the working environment for employees, and thus it is desirable to create a suitable growing environment for each livestock as much as possible while creating a comfortable working environment for employees.

Insect pests infesting animals such as mites can be natural enemies common to the livestock, and control of mites is particularly important from the standpoint of livestock farming management.

The chicken mite (scientific name: *Dermanyssus gallinae*), a mite belonging to the family *Dermanyssidae* of the order *Acarina* (the suborder *Mesostigmata*), is a blood-sucking insect pest that has an adult body length of 0.7 to 1.0 mm and infests poultry such as chicken. It has been reported that chickens infested by chicken mite decrease dietary intake and egg-laying rates due to stress from being blood sucked and die from anemia.

On the other hand, these mites are also known to cause damage to mammals including human and contribute to the deterioration of working environment in the livestock farming industry. In particular, there are some reports that about 80% of egg-laying hen farms are infested by chicken mites.

Cellulose nanofibers (hereinafter sometimes referred to as CNF) are attracting attention as a carbon-neutral material for the purpose of efficiently reducing CO2 in the atmosphere as a countermeasure against global warming. CNF has excellent properties such as light weight, high strength, a low coefficient of thermal expansion, large surface area, and spreadability and is expected to be used in various fields in the future.

Patent Document 1 discloses an invention of an insect pest control agent comprising porphyran as an ingredient for controlling insect pests with stigmata and a method for producing the insect pest control agent.

Patent Document 2 discloses that an insect pest control agent can control chicken mites, in which the insect pest control agent can be prepared by mixing a seaweed extract solution obtained by charging laver into hot water to which ash obtained by burning dried seaweed has been added, stirring it for a predetermined time, and then filtering it and a solution obtained by charging a powder comprising high molecular weight chitosan and low molecular weight chitosan and lecithin, which is a phospholipid, into warm water, stirring, and dissolving the powder.

Non-patent document 1 discloses a technique in which when contacting with a body of chicken mite, a naturally occurring environmental control material derived from aquatic plants damages the body and further absorbs body fluid of the chicken mite and renders it inactive.

Non-patent document 2 discloses a technique related to a new type of miticide that has the function of insect growth control different from that of conventional miticides.

### Citation List

### Patent Documents

Patent Document 1: Japanese Patent No. 6407192
Patent Document 2: Japanese Patent Laid-Open No. 2009-51783

### Non-Patent Documents

Non-Patent Document 1: "BUGFIXER" [online] [retrieved on October 21, 2020], Internet URL:http://tset-co.com/%E8%A3%BD%E5%93%81%E7%B4%B9%E4%BB%8B/%E3%83%90%E3%82%B 0%E3%83%95%E3%82%A3%E3%82%AF%E3%82%B5%E3%83%BC/
Non-Patent Document 2: "Toward a New Era of Control against Chicken mites" (in Japanese) [online] [retrieved on October 21, 2020], Internet URL: https://www.sumika-env-sci.jp/business/pdf/139-1.pdf

The invention of the insect pest control agent described in Patent Document 1, the agents described in Non-Patent Documents 1 and 2, and the like can be useful from the viewpoint of controlling chicken mites. The invention of the expellant described in the Patent Document 2 can be also useful from the viewpoint that the nature of components of the expellant allows the expellant to cause little risk of transfer of harmful components to hen eggs and no problem if a worker accidentally inhales the expellant.

However, the invention described in the Patent Document 1 comprises a lot of vegetable oil in addition to porphyran, which makes a floor slippery and dangerous immediately after spraying.

The invention described in Patent Document 2 has a slow effect of controlling chicken mites, which may require a large amount of the expellant or may not achieve the desired control effect.

Furthermore, in the technique disclosed in Non-Patent Document 1, silicate and other salts are insoluble in water and have high specific gravity, and thus it is necessary to constantly stir the spray solution or the like, leading to less workability.

The technique disclosed in Non-Patent Document 2 may cause an unfavorable environment for employees immediately after spraying the agent and appearance of drug-resistant chicken mites in the future.

Furthermore, spraying the commonly used chemicals as described above requires wearing of protective equipment such as protective masks, protective glasses, rubber coats, and rubber gloves to prevent inhalation and injury to human body. In addition, employees are required to perform the spraying operation quickly and reliably while taking care not to apply the chemicals on human body and chickens. These requirements place a tremendous mental and physical burden on workers.

Therefore, effective means and methods that can more efficiently create growing environments for livestock and other animals have not yet been established.

### Summary of the Invention

### Problems to be solved by the Invention

The present invention has been made in view of the above circumstances and aims to provide a dispersion for environmental improvement that can easily create growing environments for livestock and other animals and can improve working environments for employees.

### Means for solving the Problems

As a result of the intensive investigation to achieve the above-mentioned purpose, the present inventors focused on the properties of ultrafine fibers. In other words, the present inventors found that the above problems can be solved by utilizing the properties of a dispersion comprising ultrafine fibers, such as shrinking of the ultrafine fibers or forming of an ultrathin net film in the process of drying of the dispersion to facilitate dust collection in livestock houses and the like by linking dust particles together via the ultrafine fibers to form a secondary aggregate with multiple dust particles assembled or to facilitate cleaning or other operations by immobilizing pests such as mites onto the floor or pillars on which the organisms are present in the form of a net-like film or other forms that can be easily peeled off from the floor or pillars. In this way, the present invention has been completed.

Thus, the dispersion for environmental improvement of the present invention is characterized by the presence of ultrafine fibers in the dispersion.

### Advantageous Effect of the Invention

The present invention provides a dispersion for environmental improvement that can easily create growing environments for livestock and other animals and can improve working environments for employees.

### Brief Description of the Drawings

FIG. 1 is a conceptual diagram of an apparatus for producing a dispersion for environmental improvement (an apparatus for fiber breakdown).
FIG. 2 is another conceptual diagram of an apparatus for producing a dispersion for environmental improvement (an apparatus for fiber breakdown).
FIG. 3 is a conceptual diagram showing an enlarged view of a part of the apparatus for producing a dispersion for environmental improvement (an apparatus for fiber breakdown) shown in FIG. 2.
FIG. 4 shows a dried dispersion for environmental improvement.
FIG. 5 shows a dried dispersion for environmental improvement.
FIG. 6 shows the state of a dispersion for environmental improvement after spraying the dispersion on the dust, dirt, and feathers from a poultry house.
FIG. 7 shows the state of a dispersion for environmental improvement after spraying the dispersion on a population of chicken mite eggs.
FIG. 8 shows the bodies of chicken mites attached to each other by ultrafine cellulose fibers.
FIG. 9 shows the legs of chicken mites attached to each other by ultrafine cellulose fibers.
FIG. 10 shows the formation of a net composed of ultrafine cellulose fibers around chicken mites.
FIG. 11 shows the adhesion of zeolite onto the glass surface as described in Example 11.
FIG. 12 shows the state of the glass surface as described in Comparative Example 2.

### Mode for carrying out the Invention

A dispersion for environmental improvement of the present invention has an advantage of the ability to use natural materials to immobilize pests and others and collect debris, dust, dirt, dust particles, and other materials. The dispersion has another advantage of lacking adverse effects on humans, livestock, or other animals due to use of natural materials.

The present invention will be described more specifically below on the basis of the Examples. It should be noted that the present invention is not limited to the following Examples.

### (Microfiber that has a fiber width on the order of micrometer)

The microfiber typically has a fiber width of 1 to 100 µm, preferably 1 to 50 µm.

The microfiber typically has a fiber length of 500 µm to 10 mm, preferably 500 µm to 5 mm.

The fiber width and fiber length of the microfiber are values obtained by averaging measurements of any ten fibers selected under a microscope. The fiber width and fiber length of microfiber are measured at the trunk of the fiber. Such fiber width and fiber length measured at the trunk of the fiber are used whether the microfiber exists as only the trunk of the fiber, as the trunk and ultrafine branches from the trunk, or as the trunk, the ultrafine branches, and many more ultrafine branches from the branches.

In other words, the fiber width and fiber length of microfiber in the present invention are measured at the trunk of the fiber whether the microfiber is branched off or not from the trunk of the fiber. Microfibers in the ranges of the fiber width and fiber length described above can be used as microfibers whether the microfibers are branched off or not from the trunk of the fibers.

The microfibers are made from ingredients including polysaccharides such as cellulose (including products from microorganisms), chitin, and chitosan, proteins such as collagen and gelatin, polylactic acid, and polycaprolactam.

### (Nanofiber that has a fiber width on the order of nanometer)

The nanofiber typically has a fiber width of 3 to 1000 nm, preferably 3 to 500 nm, and more preferably 3 to 200 nm.

The nanofiber typically has a fiber length of 200 nm to 2000 µm, preferably 1 to 1000 µm, and more preferably 10 to 500 µm.

The fiber width and fiber length of the nanofibers are values obtained by averaging measurements of any ten fibers selected under a microscope. The fiber width and fiber length of nanofiber are measured at the trunk of the fiber. Such fiber width and fiber length measured at the trunk of the fiber are used whether the nanofiber exists as only the trunk of the fiber, as the trunk and ultrafine branches from the trunk, or as the trunk, the ultrafine branches, and many more ultrafine branches from the branches.

In other words, the fiber width and fiber length of nanofiber in the present invention are measured at the trunk of the fiber whether the nanofiber is branched off or not from the trunk of the fiber. Nanofibers in the ranges of the fiber width and fiber length described above can be used as nanofibers whether the nanofibers are branched off or not from the trunk of the fibers.

Like microfibers, nanofibers are made from ingredients including polysaccharides such as cellulose (including products from microorganisms), chitin, and chitosan, proteins such as collagen and gelatin, polylactic acid, and polycaprolactam.

The present invention will be described below in detail. Here, the term "ultrafine fiber" shall be used for the concept that includes the microfibers and nanofibers described above and shall be represented by putting the name of ingredient from which the fiber is derived between ultrafine and fiber. For example, when the ultrafine fiber is derived from cellulose, it is designated ultrafine cellulose fiber.

Thus, examples of ultrafine fibers that can be used in the present invention include ultrafine chitin fiber, ultrafine chitosan fiber, ultrafine collagen fiber, ultrafine gelatin fiber, and ultrafine polylactide fiber.

The ultrafine fibers according to the present invention are obtained by a process of breaking down polysaccharides. A method for preparing ultrafine fibers that are derived from cellulose fibers will be described. In the present invention, examples of the ingredients from which the ultrafine cellulose fiber is derived include cellulose fibers derived from polysaccharides, including natural plants such as wood fiber, bamboo fiber, sugarcane fiber, seed hair fiber, and leaf fiber, or pellicles, which are 100% cellulosic gel-like substances derived from bacterial cellulose (polysaccharides) produced by microorganisms including acetic acid bacteria. The ultrafine cellulose fiber may also be produced from crop residues derived from leaves, flowers, stems, roots, and hulls of plants such as bagasse, rice straw, used tea leaves, and squeezed lees of fruit juice. The ultrafine cellulose fiber may be used alone or in combination of two or more of the fibers. When a polysaccharide except pellicle is used, it is preferably a pulp with an α-cellulose content of 60% to 99% by mass. The main ingredient except α-cellulose is hemicellulose, and the ultrafine cellulose fibers may contain a small amount of lignin. If the ultrafine cellulose fibers have a purity of an α-cellulose content of less than 60% by mass, the properties of cellulose such as high strength, heat resistance, high rigidity, high impact resistance, and high oxygen barrier property cannot be fully exploited, and problems may occur such as quality deterioration due to coloring and gas generation due to heat. Therefore, the ultrafine cellulose fibers preferably have an α-cellulose content of 60% or higher. On the other hand, if the ultrafine cellulose fibers have a purity of an α-cellulose content of 99% by mass or higher, the fibers are strongly bound to each other by hydrogen bonds due to low hemicellulose content, making it difficult to break down the fibers into a nanometer level.

The cellulose can be paper and papermaking pulp because of their ready availability and low cost. Such pulp is produced by any methods that are not particularly limited and includes bleached kraft pulp, unbleached kraft pulp, sulfite pulp, soda pulp, thermomechanical pulp, deinked pulp, recovered paper pulp, and dissolving pulp. Among these, bleached and unbleached kraft pulp are preferred because of their more ready availability. It should be noted that the pulp may be dry or wet and may also be in powder form or other forms.

The ultrafine cellulose fibers in the present invention are subjected to the following fiber breakdown to give a dispersion of ultrafine cellulose fibers (hereinafter sometimes referred to as hydrated cellulose fiber).

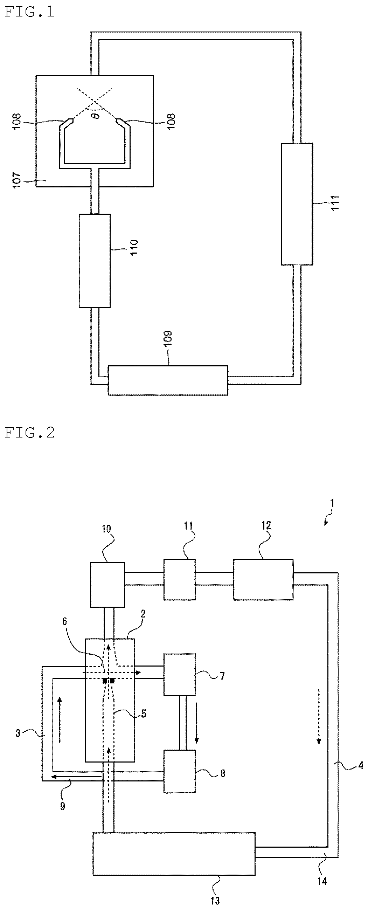

The fiber breakdown is performed by aqueous counter collision (hereinafter sometimes referred to as the ACC method) shown in FIG. 1. This method comprises filling two nozzles facing each other (108a, 108b in FIG. 1) in a chamber (107 in FIG. 1) with pulp suspended in water and injecting the pulp suspensions from these nozzles toward a single point to collide them. The apparatus shown in FIG. 1 is a liquid circulation type and comprises a tank (109 in FIG. 1), a plunger (110 in FIG. 1), two opposing nozzles (108a, 108b in FIG. 1), and, if necessary, a heat exchanger (111 in FIG. 1), in which the two nozzles are filled with microparticles dispersed in water, and the microparticles are injected from the opposing nozzles (108a, 108b in FIG. 1) at a high pressure to collide them each other in water.

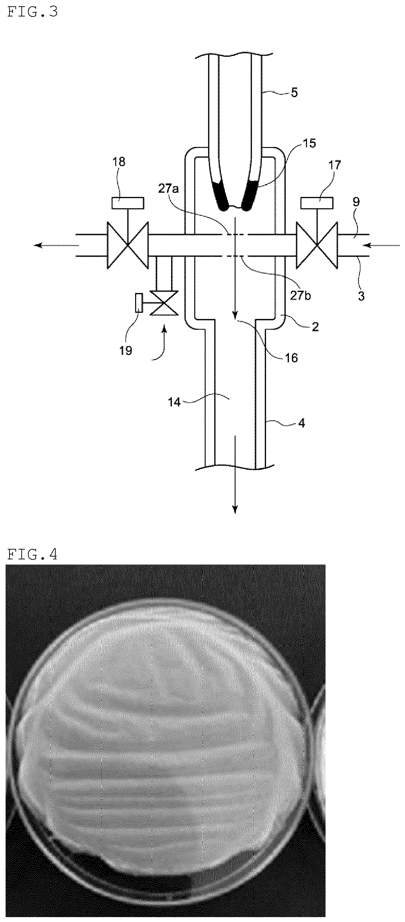

Before performing the fiber breakdown described above, a pretreatment apparatus may be used to perform a fiber breakdown process (FIGS. 2 and 3). Other fiber breakdown methods may also be performed in such a pretreatment apparatus. The fiber breakdown in such a pretreatment apparatus is performed by colliding a mixture of 0.5 to 10% by mass polysaccharides in water with high-pressure water at a pressure of about 50 to 400 MPa. This can be performed, for example, using the manufacturing equipment 1 shown in FIG. 2. The manufacturing equipment 1 comprises a first fluid medium-supplying channel that represents a polysaccharide slurry-supplying channel 3 configured to allow a polysaccharide slurry to be supplied to a single chamber 2 and a second fluid medium-supplying channel 4 that circulates a non-polysaccharide slurry, such as water, through the single chamber 2. The single chamber 2 comprises an orifice injector 5 in the chamber, in which the orifice injector 5 injects, through the orifice, the non-polysaccharide slurry in the second fluid medium-supplying channel 4 in a direction crossing the direction of polysaccharide slurry supplied from the polysaccharide slurry-supplying channel 3. The polysaccharide slurry-supplying channel 3 allows a polysaccharide slurry to circulate through the single chamber 2.

The polysaccharide slurry-supplying channel 3 and the second fluid medium-supplying channel 4 have an intersection 6 in the single chamber 2.

The polysaccharide slurry-supplying channel 3 is configured to comprise a tank 7 that supplies and stores a polysaccharide slurry and a pump 8 on a circulation channel 9. The second fluid medium-supplying channel 4 is configured to comprise a tank 10, a pump 11, a heat exchanger 12, and a plunger 13 on a circulation channel, fluid medium-supplying channel 4.

The non-polysaccharide slurry is, for example, water originally held in the tank 10 but contains, at a concentration corresponding to the progress of operation, polysaccharide that has been made ultrafine by passing through the intersection 6 and then being held in the tank 10 again after the start of the manufacturing equipment 1. Therefore, the non-polysaccharide slurry collectively refers to such a fluid containing polysaccharide.

As shown in FIG. 3, the circulation channel 9 of the polysaccharide slurry-supplying channel 3 is configured to penetrate the chamber 2, and the orifice injection port 15 of the orifice injector 5 connected to the plunger 13 of the second fluid medium-supplying channel 4 opens within the chamber 2 such that the non-polysaccharide slurry can be injected through the orifice in a direction crossing the circulation channel 9 to penetrate the circulation channel 9. The second fluid medium-supplying channel 4 is configured so that the discharge port 16 of chamber 2 is provided in position to be located opposite to the orifice injection port 15 of chamber 2 and is connected to the circulation channel of the second fluid medium-supplying channel 4.

On the other hand, the circulation channel 9 of the polysaccharide slurry-supplying channel 3 is formed using, for example, a plastic hose, rubber hose, or aluminum pipe. A one-way valve 17 that opens only in the direction toward the chamber 2 is attached to the inlet side of the circulation channel 9 to the chamber 2. A one-way valve 18 that opens only in the outward direction from the chamber 2 is further attached to the outlet side of the circulation channel 9 from the chamber 2. In addition, an air inlet valve 19 is attached to the circulation channel 9 between the chamber 2 and the one-way valve 18, and this air inlet valve 19 opens only in the direction that takes air into the circulation channel 9 from the outside.

The manufacturing equipment described above can be used to produce ultrafine cellulose fibers as follows.

The non-polysaccharide slurry is circulated through the second fluid medium-supplying channel 4 through the chamber 2. Specifically, the non-polysaccharide slurry in the tank 10 is circulated in the fluid medium-supplying channel 4 through the heat exchanger 12 and plunger 13 using the pump 11. On the other hand, the polysaccharide slurry is circulated in the polysaccharide slurry-supplying channel 3 through the chamber 2. Specifically, the polysaccharide slurry in the tank 7 is circulated in the circulation channel 9 formed by a plastic hose, a rubber hose, or other hoses using the pump 8.

This allows the non-polysaccharide slurry circulated in the second fluid medium-supplying channel 4 to be injected through the orifice to the polysaccharide slurry that is circulated in the polysaccharide slurry-supplying channel 3 and passes through the chamber 2. Specifically, high-pressure water is supplied from the plunger 13 to the orifice injection port 15 connected to the plunger 13 and is then injected through the orifice from the orifice injection port 15 to the circulation channel 9 at a high pressure of about 50 to 400 MPa.

As a result, the non-polysaccharide slurry penetrates the circulation channel 9 in a direction crossing the circulation channel 9 by passing through the through holes 27a and 27b preformed on the circulation channel 9 formed using, for example, a plastic hose, a rubber hose, or an aluminum pipe, to be discharged toward the discharge port 16 of the chamber 2 while entraining the polysaccharide slurry that circulates in the circulation channel 9, and finally flows into the second fluid medium-supplying channel 4. This allows the non-polysaccharide slurry to circulate again in the second fluid medium-supplying channel 4.

In the process of repeating the process described above, the polysaccharide contained in the polysaccharide slurry circulating in the polysaccharide slurry-supplying channel 3 and passing through chamber 2 and the non-polysaccharide slurry circulating in the second fluid medium-supplying channel 4 is gradually broken down to give a CNF dispersion with a highly uniform degree of fiber breakdown commensurate with its use.

The degree of fiber breakdown from pulp fiber to ultrafine cellulose fiber can be evaluated on the basis of the viscosity value of the dispersion of ultrafine cellulose fibers. In other words, a dispersion of ultrafine cellulose fibers with an increased degree of fiber breakdown has a low viscosity value because it contains the ultrafine cellulose fibers with short fiber lengths. Thus, a dispersion of ultrafine cellulose fibers with a high degree of fiber breakdown will have a low viscosity. In contrast, a dispersion of ultrafine cellulose fibers with a higher viscosity value will have a high viscosity because the ultrafine cellulose fibers in such a dispersion of ultrafine cellulose fibers have longer fiber lengths. Therefore, this dispersion has a lower degree of fiber breakdown than that of the above-mentioned dispersion of ultrafine cellulose fibers.

The ratio of fiber length to fiber diameter after fiber breakdown (aspect ratio) differs from one pulp fiber to another, leading to individually different viscosity values of dispersions of ultrafine cellulose fibers.

Furthermore, a viscosity of a dispersion of 1 wt% ultrafine cellulose fibers in water can be adjusted in the range of approximately 300 to 10000 mPas, for example, by combining different types of pulp fibers or adjusting the degree of fiber breakdown.

The ultrafine cellulose fiber obtained in the manner described above has no structural change of cellulose molecules because it is obtained from the nanoscale breakdown process performed by cleaving only the interaction between natural cellulose fibers, and has a structural formula represented by the following Chemical Formula 1. That is to say, the ultrafine cellulose fiber used in the present invention has six hydroxyl groups in a cellobiose unit in Chemical Formula 1 and is not chemically modified. This can be confirmed by FT-IR to compare the IR spectrum of cellulose with that of the CNF used in the present invention.

The aqueous counter collision treatment increases the temperature of the treated materials as the treatment is repeated. Thus, when subjected to the treatment once, the treated materials may be cooled to, for example, 4 to 20°C or 5 to 15°C, as needed. An apparatus for the counter collision treatment can also be provided with a device for cooling. Furthermore, adjusting the treatment conditions (such as treatment pressure, number of treatment, nozzle diameter, and treatment temperature) can adjust the average fiber width, average fiber length, permeability, viscosity, and the like of the resulting ultrafine cellulose fibers. For example, when ultrafine cellulose fibers on the order of micrometer are desired, the number of treatment should be reduced, and when ultrafine cellulose fibers on the order of nanometer are desired, the number of treatment should be increased.

Cellulose fibers on the order of micrometer and nanometer can also be mixed to produce ultrafine cellulose fibers including cellulose fibers on the order of both micrometer and nanometer. Here, adjusting the proportion of either one can also prepare the ultrafine cellulose fibers that contain either one more than the other or prepare the two types of ultrafine cellulose fibers at an approximately equal proportion.

When the average fiber width and average fiber length of ultrafine cellulose fibers are determined in such cases, it may be difficult to measure the fibers in a group of small fiber width and short fiber length and a group of large fiber width and long fiber length using the same microscope. In such cases, fibers in the former and latter groups are measured with different microscopes, and the measurements of any ten fibers selected are averaged. Specifically, electron microscopes such as SEM and TEM are used for the measurement of the former group, while light microscopes or the like are used for the measurement of the latter group.

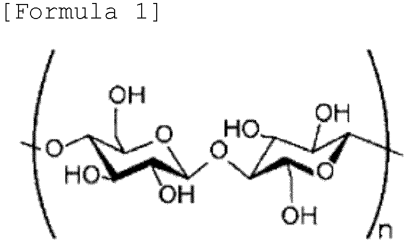

In the counter collision treatment, the energy applied is far less than the energy to break covalent bonds (estimated to be 1/300 or less), and a reduction in the degree of polymerization of cellulose is unlikely to occur. The ultrafine cellulose fibers obtained by the ACC method have both a hydrophilic site and a hydrophobic site and exhibit amphiphilicity.

In the present invention, regardless of cellulose nanofibers obtained by chemical treatment methods or ultrafine fibers obtained by physical methods, they can be used as a dispersion for environmental improvement. The chemical treatment methods include a TEMPO oxidation catalyst, phosphorylation, ozonation, enzyme treatment, maleic acid treatment, hydrophobic denaturation with an alkenylsuccinic acid anhydride, hydrophobic denaturation with an alkylketene dimer, and hydrophobic denaturation with acetylation or other reactions, which are known as a method for producing ultrafine fibers derived from other raw materials. The physical methods make cellulosic fibers thin by wet grinding that utilizes a grinder (millstone grinder), a disk refiner, a conical refiner, a high pressure homogenizer, and a bead mill and mechanical actions such as wet blasting, ultrasonic breakdown, kneading, and frozen grinding. Ultrafine fibers obtained by a combination of chemical and physical treatments can also be used as a dispersion for environmental improvement.

### (Dispersion for environmental improvement)

The term "dispersion for environmental improvement" as used herein refers to a dispersion comprising microfibers that have a fiber width on the order of micrometer and/or nanofibers that have a fiber width on the order of nanometer. The dispersion for environmental improvement may also comprise, in addition to the ultrafine fibers, auxiliary agents such as an additive, a surfactant, or a preservative to the extent that such auxiliary agents do not inhibit the function of the dispersion for environmental improvement.

The term "environmental improvement" as used herein means a concept that includes methods and means to protect the health of human and livestock and/or the raising and growing environments for livestock, to improve the working environment, and to maintain cleanliness of the environment.

This concept includes methods and means to remove debris, dust, dirt, dust particles, and other materials on general substances, tools, and facilities used in the raising and growing of livestock, specifically on surfaces made of glass, wood, concrete, porcelain, ceramic, plastic, rubber, fabric, or metal, bedding materials, and the like and methods and means to wash, disinfect, and sterilize such surfaces, bedding materials, and the like. This concept also includes methods and means to eliminate the presence of pests, their carcasses, feces, eggs, larvae, or the like on these surfaces and/or on livestock bodies.

The facilities may also include plastic houses for livestock, simple houses for livestock, composting areas, and warehouses to store tractors and equipment.

It goes without saying that the eggs and larvae are found in, in addition to the surfaces and/or livestock bodies described above, urine, feces, and other wastes present in houses, composting areas, composting facilities, and warehouses as well as the egg-laying and growing sites of the aforementioned pests and other organisms.

On the other hand, in this regard, diagnostic, therapeutic, and surgical methods for treating human or animals are excluded from the scope of the present invention.

The content of ultrafine fibers in the dispersion for environmental improvement is not particularly limited and can range from 0.0001% by mass to 10% by mass inclusive, preferably 0.005% by mass to 3% by mass, and more preferably 0.01% by mass to 0.5% by mass. This is because the environmental improvement effect of ultrafine fibers will be reduced if the content of ultrafine fiber is too low. This is also because a content of 10% by mass or more of the dispersion for environmental improvement leads to high viscosity, reduced sprayability, and difficulty of uniform spraying.

The ultrafine fibers are preferably dispersed in water as a solvent.

The dispersion for environmental improvement can be blended with some ingredients in addition to ultrafine fibers. Such ingredients are not particularly limited and can be dissolved in, separated to, suspended in, mixed with, impregnated to, adsorbed on, or adhered to suitable inert carriers or additionally blended with generally widely used auxiliary agents including a surfactant, a binder, a tackifier, a thickener, a colorant, a cryoprotectant, a desiccant, an antioxidant, an ultraviolet absorber, a deodorant, a pH adjuster, a preservative, an attractant, an emulsifier, an emulsion, a film-forming agent, and a gellant, if necessary, in an appropriate amount that does not inhibit the function of the dispersion for environmental improvement. The auxiliary agents may be used alone or in combination of two or more of the auxiliary agents and may be chemically synthesized or extracted from natural sources.

The dispersion for environmental improvement of the present invention can be blended with known auxiliary agents such as an insecticide or repellent, a microbicide, an antimicrobial agent, a disinfectant, a synergist, a rejectant, a fungicide, an antioxidant, and a pastille in an amount that does not inhibit the function of the dispersion for environmental improvement.

Such blending can provide the dispersion with a variety of functions commensurate with a formulation of a dispersion for environmental improvement of the present invention.

Blending the various agents described above in the dispersion for environmental improvement of the present invention can adsorb the ultrafine fibers in the dispersion for environmental improvement onto the wall, fences, apparatuses, floor, and the like of livestock houses, due to the advantage of the large surface area of the ultrafine fibers in the dispersion.

Furthermore, the advantage of the large surface area of ultrafine fibers can adsorb the active ingredients in the various agents onto the ultrafine fibers.

Therefore, even if the dispersion for environmental improvement dries, the ultrafine fibers that have adsorbed the active ingredients continue to adhere to walls and other surfaces in a net-like form, preventing the active ingredients from running down and being wasted. As a result, the amount of the various expensive agents described above to be used can be decreased. The concentration of the various agents to be used can also be effectively increased.

Inert carriers that can be used in the present invention may be either solid or liquid. Solid carriers can include, for example, grain flour, grass flour, root flour, wood flour, synthetic polymers such as ground synthetic resins, inorganic mineral powder such as clay (such as kaolin and bentonite), talc, silica (such as diatomaceous earth and silica sand), active carbon, sand, calcium carbonate (including products from organisms such as seashells and eggshells), mineral powder, metal powder (e.g., silver particles), plastic carriers such as polyethylene, polypropylene, and polyvinylidene chloride, and other solid materials. These solid carriers may be used alone or in combination of two or more of the solid carriers.

Liquid carriers include, for example, alcohols including monohydric alcohols such as methanol and ethanol and polyhydric alcohols such as ethyleneglycol, polyethyleneglycol, and glycerin and polyhydric alcohol compounds such as propylene glycol ether; ketones such as acetone and methyl ethyl ketone; ethers such as ethyl ether and dioxane; aliphatic hydrocarbons such as normal paraffin and mineral oil; aromatic hydrocarbons such as benzene and toluene; halogenated hydrocarbons such as dichloromethane and chloroform; esters such as ethyl acetate, diisopropyl phthalate, and dibutyl phthalate; and vegetable oils such as soybean oil, rapeseed oil, and castor oil. These liquid carriers may be used alone or in combination of two or more of the liquid carriers.

Surfactants to be used as a dispersing agent or wetting agent include, for example, nonionic detergents such as polyoxyethylene sorbitan fatty acid ester, sucrose fatty acid ester, and polyoxyethylene hydrogenated castor oil; anionic surfactants such as alkyl sulfates and polyoxyethylene alkyl ether sulfates; cationic surfactants such as laurylamine hydrochloride and stearylamine hydrochloride; and amphoteric surfactants such as amino acid-based or betaine-based. These surfactants may be used alone or in combination of two or more of the surfactants.

The binder and tackifier include, for example, carboxymethylcellulose and salts thereof, dextrin, water-soluble starch, xanthan gum, guar gum, sucrose, and polyvinylpyrrolidone.

The thickener includes, for example, water-soluble macromolecules such as xanthan gum, guar gum, diutan gum, carboxymethylcellulose, polyvinylpyrrolidone, pectin, and polysaccharides and inorganic fine powders such as high-purity bentonite.

The colorant includes, for example, inorganic pigments such as an iron oxide and organic dyes such as alizarin dyes and azo dyes.

The cryoprotectant includes, for example, polyhydric alcohols such as ethyleneglycol and diethyleneglycol.

The deodorant, desiccant, and humidity control agent include antioxidants such as zeolite, quick lime, magnesium oxide, phenol compounds, amine compounds, sulfur compounds, and phosphate compounds; and ultraviolet absorbers such as salicylic acid compounds and benzophenone compounds.

Among these, zeolite, in particular, is added to livestock feed and fed to improve digestive function and feed efficiency, to promote growth and development, and to prevent diarrhea and loose stools by improving intestinal regulation. Zeolite is also utilized in many fields for deodorizing and removing the odor of urine and feces.

The preservative includes, for example, potassium sorbate, 1,2-benzothiazolin-3-one, and lignin. The antimicrobial agent and microbicide include tannin, saponin, and polyphenol.

The insecticide or repellent includes synthetic insecticides such as organophosphorus compounds, carbamate compounds, pyrethroid compounds, and insect growth control agents; natural insecticides such as pyrethrum extract and neem extract; insecticides derived from microorganisms and soil bacteria; organophosphate insecticides such as dichlorvos, fenitrothion, and Marathon; and insect growth control agents such as methoprene and hydroprene.

The microbicide includes benzalkonium chloride, benzethonium chloride, chlorinated lime, and sodium N-chloro-P-toluenesulfonamide.

The synergist includes N-(2-ethylhexyl)-1-isopropyl-4-methylbicyclo[2,2,2]oct-5-ene-2,3-dicarboxyimide, isobornyl thiocyanoacetate, octachlorodipropylether, and N-(2-ethyhexyl)-bicyclo[2,2,1]hept-5-ene-2,3-dicarboxyimide.

The rejectant includes N,N-diethyltoluamide (DEET), dimethyl phthalate, dibutyl phthalate, 2-ethyl-hexanediol, dibutyl succinate, and p-menthane-3,8-diol.

The fungicide includes 2-(4-thiazolyl)-benzimidazole and N-(fluorodichloromethylthio)-phthalimide. The antioxidant includes erythorbic acid, DL-α-tocopherol, dibutylhydroxytoluene, and isopropyl citrate.

The pastille includes citronella oil, orange oil, lemon oil, lime oil, yuzu oil, lavender oil, peppermint oil, eucalyptus oil, jasmine oil, hinoki oil, green tea essential oil, limonene, α-pinene, linalool, geraniol, phenylethyl alcohol, amylcinnamic aldehyde, and benzyl acetate.

The dispersion for environmental improvement according to the present invention targets pests that have body lengths in the range of approximately 0.1 to 10 mm and may be harmful to the health and the like of human, livestock, and poultry and/or eggs, larvae, and nymphs of the pests. Specifically, such pests belong to the suborder *Metastigmata, Mesostigmata, Astigmata, Trombidiformes,* the genus *Culex,* the family *Muscidae,* the family *Formicidae,* the order *Siphonaptera,* the suborder *Anoplura,* the family *Dermestidae,* the family *Anobiidae,* the family *Scolytidae,* arachnids, centipedes, and the class *Diplopoda.*

The mites belonging to the suborder *Metastigmata* include English fowl tick, *Ornithodoros* spp., Relapsing fever tick, Spinose ear tick, Lone star tick, Gulf coast tick, *Haemaphysalis campanulata, Haemaphysalis flava, Haemaphysalis longicornis, Haemaphysalis megaspinosa,* Tortoise tick, Mediterranean tick, *Rhipicephalus (Boophilus) microplus, Ixodes nipponensis, Ixodes ovatus,* Western black-legged tick, *Ixodes persulcatus,* Sheep tick, Black-legged tick, Tropical horse tick, Rocky Mountain wood tick, Pacific Coast tick, *Dermacentor reticulatus,* American dog tick, *Rhipicentor* spp., American cattle tick, and *Rhipicephalus sanguineus.*

The suborder *Mesostigmata* includes *Dermanyssus hirundinis, Liponyssoides sanguineus,* the tropical rat mite, *Ornithonyssus sylviarum,* the chicken mite, *Androlaelaps casalis, Androlaelaps fahrenholz,* and *Androlaelaps pavlovskii.*

The mites belonging to the suborder *Astigmata* include *Lepidoglyphus destructor, Glycyphagus domesticus, Aleuroglyphus ovatus, Tyrophagus putrescentiae, Tyrophagus similis, Rhizoglyphus robini, Pterolichus obtusus, Megninia cubitalis, Dermatophagoides farinae, Dermatophagoides pteronyssinus, Chorioptes bovis, Otodectes cynotis, Psoroptes communis, Psoroptes cuniculi, Psoroptes ovis,* the sarcoptic mange mite, and *Notoedres cati.*

The mites belonging to the suborder *Trombidiformes* include *Chelacaropsis moored, Cheyletiella blakei, Cheyletiella parasitovorax, Cheyletiella yasguri, Cheyletus eruditus, Cheyletus malaccensis, Demodex canis, Demodex cati, Demodex folliculorum, Aceria tulipae, Eriophyes chibaensis, Eutrombicula wichmanni, Helenicula miyagawai,* and *Leptotrombidium scutellare.*

The genus *Culex* includes *Culex pipiens, Culex tarsalis,* and *Culex fatigans.*

The family *Muscidae* includes *Muscina stabulans,* the family *Calliphoridae,* the family *Sarcophagidae,* the genus *Fannia,* the family *Anthomyiidae,* the genus *Drosophila,* the family *Phoridae,* the family *Psychodidae,* the family *Sciaridae,* stable flies, gadflies, blackflies, and biting midges.

The centipedes include *Scolopendra mutilans, Scolopendra japonica, Scolopendra multidens,* and the order *Scutigeromorpha.* The class *Diplopoda* includes *Oxidus gracilis* and *Parafontaria laminata laminata.* The arachnids include *Cheiracanthium japonicum* and the redback spider.

The dispersion for environmental improvement has thixotropic properties and thus has a decreased viscosity in being sprayed, resulting in ultrafine droplets of the dispersion to allow homogeneous spraying. The dispersion for environmental improvement is preferably sprayed but can also be used by means of application, aerosolization, heat evaporation, and placement, in addition to spraying.

The ultrafine fibers of the present invention exist in a cotton-like (three-dimensional) state in the dispersion and do not easily precipitate, resulting in no requirement of separate devices for constant stirring and allowing spraying with a commercially available spray pump or other devices.

The ultrafine fibers may be sprayed at a frequency of approximately once every 1 to 2 weeks, depending on the life cycle of the pests.

### Examples

The present invention will be described below on the basis of the Examples but is not limited to these Examples.

### (Example 1)

Bamboo pulp was used as a raw material ingredient from which cellulose is derived to obtain 200 ml of a dispersion for environmental improvement (having an average fiber width of 10 nm to 20 µm, an average length of 50 um to 3500 um, and a concentration of 0.5 wt%) by the ACC method. Then, 20 ml of the resulting dispersion was placed in a Petri dish to observe the drying shrinkage of the ultrafine cellulose fibers in air drying.

The state after drying is shown in FIG. 4.

### (Example 2)

Hardwood pulp was used as a raw material ingredient from which cellulose is derived to obtain 200 ml of a dispersion for environmental improvement (having an average fiber diameter of 3 nm to 80 nm, an average fiber length of 300 nm to 20 µm, and a concentration of 0.5 wt%) by the ACC method. Then, 20 ml of the resulting dispersion was placed in a Petri dish to observe the drying shrinkage of the ultrafine cellulose fibers in air drying.

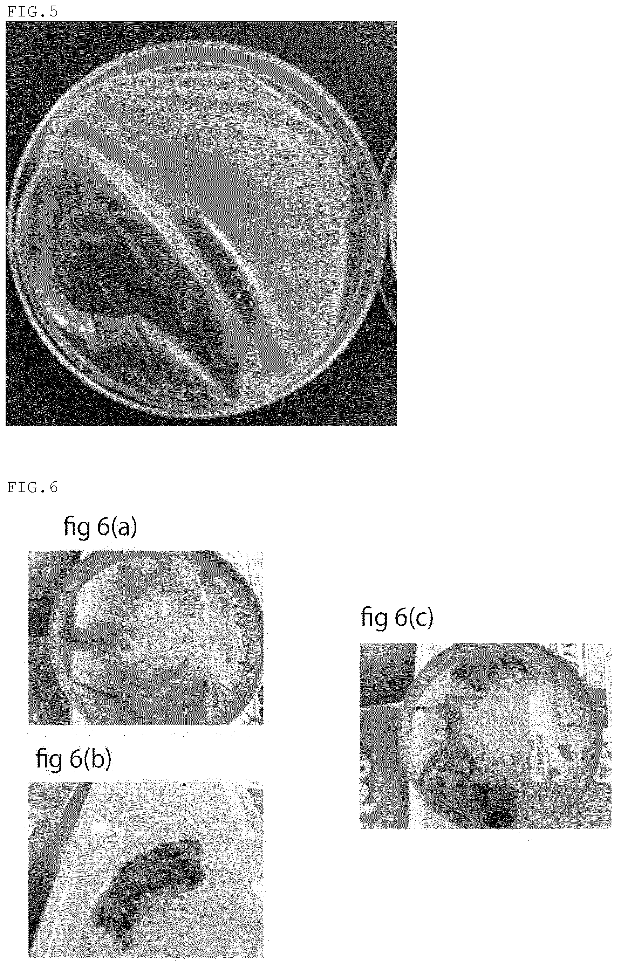

The state after drying is shown in FIG. 5.

### (Results)

The results shown in FIGS. 4 and 5 revealed that the dispersions for environmental improvement according to the present invention have drying shrinkage properties when air dried.

### (Example 3)

Dust, dirt, feathers of laying hens, and the like were collected from the inside of a poultry house, placed in a petri dish, sprayed with a 0.04% dilution prepared from the dispersion for environmental improvement used in Example 1, and followed up.

The feathers, dust, and dirt immediately after collection from the poultry house are shown in FIGS. 6(a) and 6(b), and the state in the Petri dish 7 days after the spraying is shown in FIG. 6(c).

### (Results)

It was confirmed that the drying shrinkage properties of the dispersion for environmental improvement causes agglomeration of the dirt, dust, and feathers to form small clumps.

### (Example 4)

Chicken mite eggs were collected from a poultry house, placed in a petri dish, sprayed with a 0.04% dilution prepared from the dispersion for environmental improvement used in Example 1, and followed up.

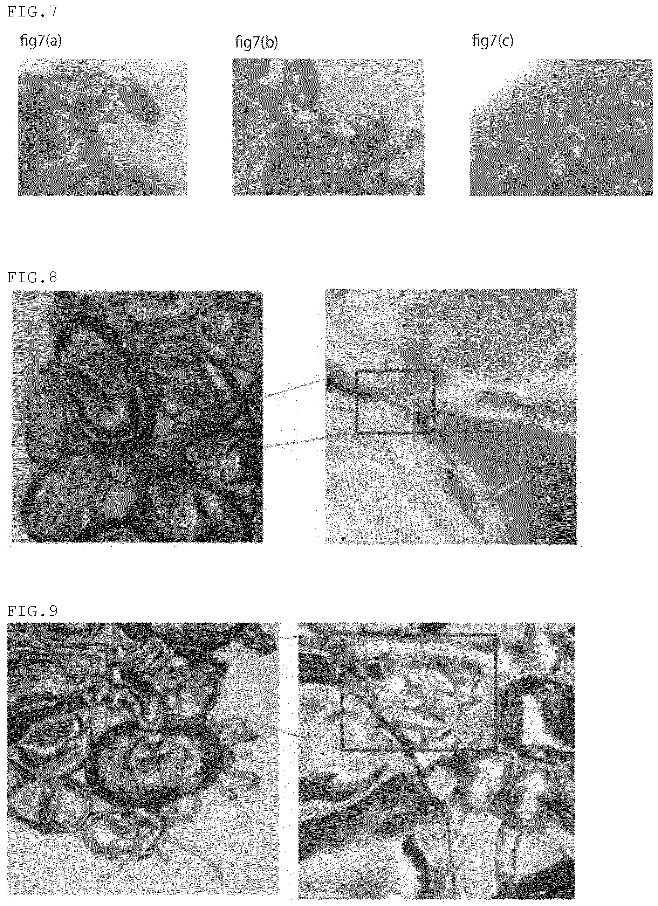

The states in the Petri dish immediately, 3 days, and 13 days after spraying are shown in FIGS. 7(a), 7(b), and 7(c), respectively.

### (Discussion of results)

The dispersion for environmental improvement of the present invention has properties of shrinking with forming an ultrathin film or nets when dried. When the dispersion for environmental improvement is sprayed on the surface of a chicken mite egg population, a film composed of ultrafine cellulose fibers is formed on the surface, and the film composed of ultrafine cellulose fibers shrinks in the process of drying of the dispersion for environmental improvement. The egg population is then trapped in a film composed of ultrafine cellulose fibers. It was found that eggs in such a state failed to hatch or even if they could hatch, the larvae failed to break the film composed of ultrafine cellulose fibers and to exit the film, resulting in immobilization in place (FIG. 7(c)).

The term film or nets as used herein refer to a mesh-like or network-like structure formed by hydrogen bonds and/or van der Waals forces at the bonding points.

### (Example 5)

Chicken mites were collected from a poultry house, placed in a petri dish, sprayed with a 0.04% dilution prepared from the dispersion for environmental improvement used in Example 1, and followed up by determining the capture rate of chicken mites by visual judgment in the area of 30 x 30 mm.

The states of the chicken mites after the follow-up are shown in FIGS. 8 to 10. The results of visual judgment are also shown in Table 3.

### (Discussion of results)

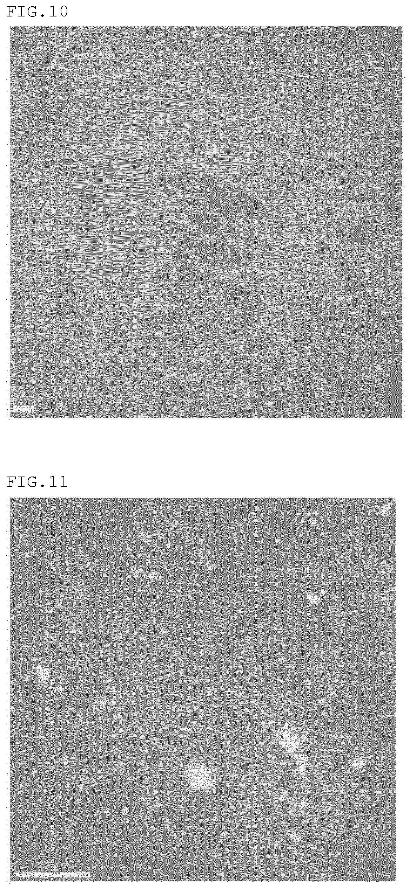

From FIG. 8, it can be seen that the bodies of chicken mites were attached together by the ultrafine cellulose fibers. From FIG. 9, it can be seen that the legs of chicken mites were attached by CNF. From FIG. 10, it can be seen that nets were formed by CNF around chicken mites.

When the dispersion for environmental improvement of the present invention is sprayed, the ultrafine cellulose fibers adhere to the bodies of chicken mites and form nets of ultrafine cellulose fibers on the abdomen and at the base of the legs of the chicken mites, arresting movement of the chicken mites to allow immobilization.

The results of Examples 1 to 5 are discussed to explain in detail the mechanism of trapping pests in livestock houses, maintenance and improvement of growing environments for livestock, and maintenance and improvement of working environments comfortable for employees.

The mechanism of trapping pests can be explained as follows.

Pests generally prefer dust, dirt, and other materials and often use these as egg-laying sites or habitats. They also often hide behind or on the back of facilities of livestock houses.

The dispersion for environmental improvement of the present invention can bring dust, dirt, and other materials into small clumps and trap pests and eggs and larvae thereof in the small clumps. Thus, when the dispersion for environmental improvement is sprayed on areas where pests and eggs and larvae thereof are present in livestock houses, the ultrafine fibers adhere to the legs and bodies of adult or larval pests. This results in immobilization of adults and larvae and causes the eggs of the pests not to hatch or, if the eggs do hatch, to be trapped in a film composed of the ultrafine fibers. Furthermore, molting of larvae and nymphs are also similarly inhibited, or if they do molt, they are trapped in a film composed of the ultrafine fibers. Even if the dispersion for environmental improvement is sprayed on areas where pests are suspected to be present in livestock houses, some individuals may not be attached to the ultrafine fibers. However, such individuals will eventually die a natural death. Alternatively, such individuals may lay eggs, but continuously spraying the dispersion for environmental improvement of the present invention allows their eggs not to hatch or, if they do hatch, to trap the eggs in a film composed of the ultrafine fibers.

Continuous spraying of the dispersion for environmental improvement of the present invention can prevent alternation of generations of pests and certainly reduce the number of pests. In addition, the dispersion for environmental improvement of the present invention reduces the number of pests due to the physical action of the ultrafine fibers, thus eliminating the need to consider residual concentrations of chemicals and preventing the development of chemical resistant pests.

The maintenance and improvement of growing environments can be explained as follows.

Using brooms and other tools to clean the inside of livestock houses and tools for raising livestock causes dust and dirt to drift on the air and thus has not been properly and appropriately performed so far. Therefore, dirt and fecal clumps that provide hiding places for chicken mites have been thoroughly removed after an all-out operation.

According to Example 3, spraying the dispersion for environmental improvement of the present invention on dust, dust, and other materials can bring them into small clumps. Such small clumps can be easily collected with brooms or other tools, so that the inside of livestock houses, tools for raising livestock, and the like can be cleaned with less labor, regardless of whether an all-out operation is performed or not. Therefore, the dispersion for environmental improvement of the present invention contributes to the maintenance of growing environments for livestock.

The maintenance and improvement of a working environment comfortable for employees can be explained as follows.

The method of spraying conventional chemicals or the like may cause some employees to experience physical discomfort immediately after spraying the chemicals due to the unique odor of the chemicals. In this respect, the dispersion for environmental improvement of the present invention is basically odorless because the dispersion comprises natural materials. Moreover, the dispersion for environmental improvement of the present invention eliminates the need to take care not to apply chemicals on employees themselves. Therefore, it can be said that the dispersion for environmental improvement of the present invention can provide a working environment comfortable for employees in view of no odor immediately after spraying and less concern about their work.

### (Example 6)

The dispersion for environmental improvement of the present invention is derived from natural materials, and thus it is expected to be basically harmless to livestock and other animals. To confirm this, after the dispersion for environmental improvement according to Example 1 was diluted to 0.04 wt% and sprayed, the weekly egg-laying rate of laying hens was investigated.

From June 17, 2020 to September 16, 2020, the weekly egg-laying rate was investigated in a poultry house where 12000 Boris Brown chickens were raised and the dispersion for environmental improvement according to Example 1 was used. The dispersion for environmental improvement according to Example 1 was sprayed on June 25, 2020.

The results of the egg-laying rate are shown in Table 1.

**[Table 1]**

| Date | 6/17 | 6/24 | 7/1 | 7/8 | 7/15 | 7/22 | 7/29 | 8/5 | 8/12 | 8/19 | 8/26 | 9/2 | 9/9 | 9/16 |
|---|---|---|---|---|---|---|---|---|---|---|---|---|---|---|
| Weekly egg-laying rate (%) | 87 | 85 | 82 | 81 | 82 | 83 | 84 | 84 | 81 | 85 | 79 | 81 | 82 | 81 |

### (Comparative Example 1)

From April 1, 2020 to September 2, 2020, the weekly egg-laying rate was investigated in a poultry house where 13000 Boris Brown chickens were raised and chemicals were used to remove chicken mites.

The chemicals that were Bolfo 50% (from Bayer Yakuhin, Ltd.) and Neguvon (from Bayer Yakuhin, Ltd.) were diluted 300-fold, and the dilution was sprayed in the poultry house on April 16, 2020.

The overall weekly egg-laying rate of the poultry house in question tended to decrease, and thus the chemicals were changed to Econosad (Elanco Japan K.K.). The Econosad was diluted 120-fold in water, and the dilution was sprayed in the poultry house on July 29, 2020.

The results of the weekly egg-laying rate are shown in Table 2.

**[Table 2]**

| Date | 4/1 | 4/8 | 4/15 | 4/22 | 4/29 | 5/6 | 5/13 | 5/20 | 5/27 | 6/3 | 6/10 | 6/17 | 6/24 | 7/1 |
|---|---|---|---|---|---|---|---|---|---|---|---|---|---|---|
| Weekly egg-laying rate (%) | 91 | 92 | 93 | 95 | 77 | 87 | 87 | 86 | 87 | 86 | 87 | 87 | 86 | 88 |

| Date | 7/8 | 7/15 | 7/22 | 7/29 | 8/5 | 8/12 | 8/19 | 8/26 | 9/2 | | | | | |
|---|---|---|---|---|---|---|---|---|---|---|---|---|---|---|
| Weekly egg-laying rate (%) | 86 | 82 | 79 | 75 | 80 | 81 | 82 | 83 | 83 | | | | | |

### (Discussion of results)

The results in Example 6 show that the number of eggs laid did not decrease even immediately after spraying, and the weekly egg-laying rate remained 80% or higher. The effect of spraying the dispersion for environmental improvement was observed for at least 2.5 months.

On the other hand, the results in Comparative Example 1 show that the weekly egg-laying rate was below 80% immediately after spraying both of the chemicals. The chemicals sprayed on April 16, 2020 remained effective for about two months, but since then the weekly egg-laying rate tended to decrease. This may result from the persistence of the effect of controlling chicken mites for about 2 months but since then the decrease in the weekly egg-laying rate due to the increase in the number of chicken mites.

### (Example 7)

The same study as in Example 5 was performed with the exception that the dispersion for environmental improvement used in Example 5 was changed to a 0.04% dilution prepared from 200 ml of a dispersion for environmental improvement (having an average fiber width of 500 nm to 50 µm, an average fiber length of 500 µm to 5000 µm, and a concentration of 0.5 wt%) that had been obtained by using bamboo pulp as a raw material by the ACC method. The capture rate of chicken mites was then determined by visual judgment in the area of 30 x 30 mm. The results are shown in Table 3.

### (Example 8)

The same study as in Example 5 was performed with the exception that the dispersion for environmental improvement used in Example 5 was changed to a 0.02% dilution prepared from 200 ml of a dispersion for environmental improvement (having an average fiber width of 10 nm to 20 µm, an average length of 50 µm to 3500 µm, and a CNF concentration of 0.5 wt%) that had been obtained by using bamboo pulp as a raw material by the ACC method. The capture rate of chicken mites was then determined by visual judgment in the area of 30 x 30 mm. The results are shown in Table 3.

### (Example 9)

The same study as in Example 5 was performed with the exception that the dispersion for environmental improvement used in Example 5 was changed to a 0.02% dilution prepared from the dispersion for environmental improvement used in Example 2. The capture rate of chicken mites was then determined by visual judgment in the area of 30 x 30 mm. The results are shown in Table 3.

### (Example 10)

The same study as in Example 5 was performed with the exception that the dispersion for environmental improvement used in Example 5 was changed to a 0.04% dilution prepared from a dispersion for environmental improvement prepared according to the Method 1 as described below. The capture rate of chicken mites was then determined by visual judgment in the area of 30 x 30 mm. The results are shown in Table 3.

### -Method 1-

Conifer pulp was used as a raw material ingredient from which cellulose is derived to obtain 200 ml of a dispersion for environmental improvement (having an average fiber width of 5 nm to 50 µm, an average length of 100 µm to 3000 µm, and a concentration of 0.5 wt%) by the ACC method.

### (Example 11)

The same study as in Example 5 was performed with the exception that the dispersion for environmental improvement used in Example 5 was changed to a 0.04% dilution prepared from a dispersion for environmental improvement prepared according to the Method 2 as described below. The capture rate of chicken mites was then determined by visual judgment in the area of 30 x 30 mm. The results are shown in Table 3.

### -Method 2-

In 100 ml of water were dispersed 1 g (dry weight) of bleached kraft pulp from conifer, 0.0125 g of 2,2,6,6-tetramethylpiperidin-1-oxy radical (TEMPO), and 0.125 g of sodium bromide. An aqueous solution of 13% sodium hypochlorite was then added to the dispersion such that 5.0 mmol of sodium hypochlorite was added per 1 g of the pulp, to start a reaction at room temperature. The pH in the system during the reaction was kept at pH 10 by adding dropwise 0.5 mol/l aqueous sodium hydroxide solution and 0.5 mol/l aqueous hydrochloric acid solution. After the reaction proceeded for 2 hours, the reactants were filtrated and washed with water to obtain TEMPO-oxidized pulp. The TEMPO pulp was dispersed in distilled water and diluted to 1% by mass to obtain a sample. The sample was then subjected to fiber breakdown in a homogenizer to obtain a water dispersion of cellulose nanofiber (having an average fiber width of 3 to 8 nm and an average length of 400 to 1200 nm).

**[Table 3]**

| | Ingredient and Treatment | Concentration | Capture rate |
|---|---|---|---|
| Example 5 | Bamboo-derived, ACC method | 0.04% | 100% |
| Example 7 | Bamboo-derived, ACC method | 0.04% | 100% |
| Example 8 | Bamboo-derived, ACC method | 0.02% | 80% |
| Example 9 | Hardwood-derived, ACC method | 0.02% | 100% |
| Example 10 | Conifer-derived, ACC method | 0.04% | 100% |
| Example 11 | Conifer-derived, TEMPO oxidation | 0.04% | 80% |

### (Example 12)

Dust, dirt, and other materials were collected from a poultry house, placed in a petri dish, sprayed with a 0.04% dilution prepared from the dispersion for environmental improvement used in Example 2, and followed up by determining the capture of chicken mites and the states of dust, dirt, and other materials by visual judgment in the area of 30 x 30 mm. It should be noted that when dirt, dust, and other materials are collected from a poultry house, chicken mites can be concomitantly collected.

It was observed that dust, dirt, and other materials were in small clumps. The visual results are shown in Table 4.

### (Example 13)

The same study as in Example 11 was performed with the exception that 200 ml of a dispersion for environmental improvement comprising bamboo pulp as an ingredient from which cellulose is derived (having an average fiber width of 5 µm to 30 µm, an average fiber length of 700 µm to 3 mm, and a concentration of 0.04 wt%) was used. The capture rate of chicken mites was then determined by visual judgment in the area of 30 x 30 mm. It was observed that dust, dirt, and other materials were in small clumps. The visual results are shown in Table 4.

### (Example 14)

The same study as in Example 11 was performed with the exception that 200 ml of a dispersion for environmental improvement comprising conifer pulp as an ingredient from which cellulose is derived (having an average fiber width of 5 µm to 30 µm, an average fiber length of 900 µm to 2 mm, and a concentration of 0.04 wt%) was used. The capture rate of chicken mites was then determined by visual judgment in the area of 30 x 30 mm. It was observed that dust, dirt, and other materials were in small clumps. The visual results are shown in Table 4.

### (Example 15)

The same study as in Example 11 was performed with the exception that 200 ml of a dispersion for environmental improvement comprising hardwood pulp as an ingredient from which cellulose is derived (having an average fiber width of 5 µm to 20 µm, an average fiber length of 1 to 6 mm, and a concentration of 0.04 wt%) was used. The capture rate of chicken mites was then determined by visual judgment in the area of 30 x 30 mm. It was observed that dust, dirt, and other materials were in small clumps. The visual results are shown in Table 4.

**Table 4]**

| | Ingredient and Treatment | Concentration | Capture rate |
|---|---|---|---|
| Example 12 | Hardwood-derived, ACC method | 0.04% | 100% |
| Example 13 | Bamboo pulp | 0.04% | 70% |
| Example 14 | Conifer pulp | 0.04% | 15% |
| Example 15 | Hardwood pulp | 0.04% | 30% |

The results in Table 4 show that chicken mites can be captured in all of the tree species and treatments utilized.

### (Example 16)

Study to confirm adsorption of ultrafine cellulose fibers on glass surface

A method described below was used to confirm that spraying onto a glass surface a dispersion for environmental improvement of the present invention into which a porous material, a water insoluble substance such as active carbon or zeolite, was blended as an auxiliary agent allowed adsorption (adhesion) of the porous material onto the glass surface.

Here, the porous material was zeolite because zeolite has many limited use conditions due to its absolute specific gravity of 2.3, which is higher than those of other porous materials, and tendency to precipitate.

First, zeolite ores were ground, and the resulting zeolite powder passed through a 150 µm mesh was dried at 105°C for 2 hours.

Next, 0.02 g of the zeolite powder was charged into 120 ml of the dispersion for environmental improvement of the present invention used in Example 5, and the mixture was stirred for 30 minutes.

A glass plate was then placed at an angle of 60 degrees from the horizontal plane by tilting it from a horizontal position toward a vertical position such that droplets roll down. Then, 0.1 g of the supernatant immediately after stirring the dispersion was dropped on the tilted glass plate. After dropping, the plate was dried at 105°C for 10 minutes.

After drying, a microscopic observation was made 15 mm below the dropping position to check for residual zeolite with a microscope. The area except the microscopically observed area was visually checked for the state. The reason for selecting 15 mm below the dropping position is to check by observing the upper area of the surface whether the zeolite particles are retained on the glass surface and adsorbed on the glass surface without being pushed away with the droplet during the process of droplet movement by gravitational fall.

The observation result is shown in FIG. 11.

### (Comparative Example 2)

The same study as in Example 16 was performed to check for residual zeolite with the exception that water was used instead of 120 ml of the dispersion for environmental improvement of the present invention used in Example 16.

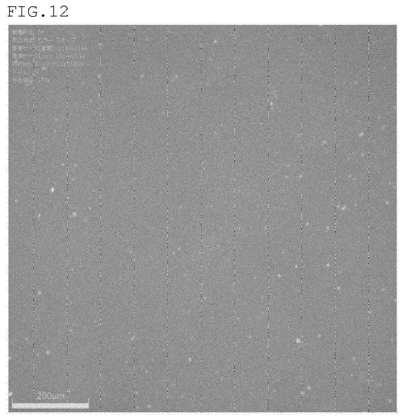

The result is shown in FIG. 12.

### (Discussion of results)

FIG. 11 shows that the zeolite adhered to the glass surface. In Comparative Example 2, it was observed that the large-sized zeolite particles were not retained onto the glass surface and ran down by gravity and accumulated at the lower part of the glass plate.

On the other hand, when the dispersion for environmental improvement of the present invention was used, it was observed that the dispersion was not accumulated at the lower part, and it was observed with a microscope that zeolite particles having a size of 100 to 150 um were uniformly adhered to the glass surface against gravity. When the zeolite was observed in detail, it was confirmed that the porous state was maintained.

Thus, the dispersion for environmental improvement of the present invention was found to be effective in adhering porous materials such as zeolite powder to glass walls and other surfaces. It can be said that the dispersion for environmental improvement of the present invention can effectively adhere the auxiliary agents blended into the dispersion onto the walls and other surfaces of livestock houses and does not allow the auxiliary agent to be run down needlessly.

In addition, it is also possible to previously include active ingredients such as insecticides, repellents, and microbicides or sustained-release active ingredients in the hollow interior of the porous material and then blend the porous material into the dispersion for environmental improvement.

### (Example 17)

Study to confirm adsorption of water-soluble substances onto ultrafine cellulose fibers using filter paper

A method described below was used to confirm that ultrafine cellulose fibers can adsorb a water-soluble auxiliary agent during being present in a liquid.

A dye (Cartasol Red K-3BN: Clariant (Japan) K.K.) was used as a water-soluble substance. The dye was added to 50 ml of a bamboo pulp dispersion (having an average fiber width of 5 µm to 50 µm, an average fiber length of 700 µm to 5000 µm, and a concentration of 1.0 wt%) at a percentage of 2% relative to the solid content of bamboo pulp. The mixture was then subjected to suction filtration with a membrane filter (DVPP09050: Millipore). The membrane filter after suction filtration was then measured for various data in a colorimeter (ZE6000, light source C/2: NIPPON DENSHOKU INDUSTRIES CO., LTD.).

The measurement results are shown in Table 5.

### (Example 18)

The same study as in Example 17 was performed to measure various data with the exception that ultrafine cellulose fibers derived from bamboo (having an average fiber width of 30 nm to 2 µm and an average fiber length of 30 µm to 2000 µm) were used instead of the bamboo pulp dispersion used in Example 17.

The measurement results are shown in Table 5.

### (Example 19)

The same study as in Example 17 was performed to measure various data with the exception that ultrafine cellulose fibers derived from bamboo (having an average fiber diameter of 10 nm to 200 nm and an average length of 1000 nm to 40 µm) were used instead of the bamboo pulp dispersion used in Example 17.

The measurement results are shown in Table 5.

**[Table 5]**

| | L* | a* | b* | ΔE* | X | Y | Z |
|---|---|---|---|---|---|---|---|
| Example 17 | 69.2 | 36.85 | 4.56 | 47.18 | 51.76 | 39.62 | 42.61 |
| Example 18 | 47.1 | 60.04 | 25.96 | 83.01 | 28.71 | 16.09 | 8.4 |
| Example 19 | 45.51 | 59.19 | 27.31 | 83.81 | 26.76 | 14.91 | 7.22 |

### (Discussion of results)

Table 5 shows that all of the values of various data measured in the Examples demonstrate retention of the dye.

Thus, it has been revealed that the ultrafine fibers in the dispersion for environmental improvement of the present invention can retain both a water-insoluble substance and a water-soluble substance. It is expected that this leads to the effect of reducing the amount of various auxiliary agents and other agents used.

## Claims

1. A dispersion for environmental improvement, wherein the dispersion comprises microfiber that has a fiber width on the order of micrometer.

2. The dispersion for environmental improvement according to claim 1, wherein the microfiber has a fiber width of 1 to 100 µm.

3. The dispersion for environmental improvement according to claim 1 or claim 2, wherein the microfiber is ultrafine cellulose fiber.

4. A dispersion for environmental improvement, wherein the dispersion comprises nanofiber that has a fiber width on the order of nanometer.

5. The dispersion for environmental improvement according to claim 4, wherein the nanofiber has a fiber width of 3 to 1000 nm.

6. The dispersion for environmental improvement according to claim 4 or claim 5, wherein the nanofiber is ultrafine cellulose fiber.

7. A dispersion for environmental improvement, wherein the dispersion comprises microfiber that has a fiber width on the order of micrometer and nanofiber that has a fiber width on the order of nanometer.

8. The dispersion for environmental improvement according to claim 7, wherein the microfiber has a fiber width of 1 to 100 µm, and the nanofiber has a fiber width of 3 to 1000 nm.

9. The dispersion for environmental improvement according to claim 7 or claim 8, wherein the microfiber and nanofiber are cellulose fiber.

10. The dispersion for environmental improvement according to claim 3, claim 6, or claim 9, wherein the cellulose fiber has an α-cellulose content of 60 to 99% by mass in its raw material, and
the cellulose fiber has six hydroxyl groups and both a hydrophilic site and a hydrophobic site in its cellobiose unit and exhibits amphiphilicity.

11. The dispersion for environmental improvement according to any one of claim 1 to claim 10, wherein the microfiber and nanofiber are derived from bamboo.

12. The dispersion for environmental improvement according to any one of claim 1 to claim 10, wherein the microfiber and nanofiber are derived from a conifer.

13. The dispersion for environmental improvement according to any one of claim 1 to claim 12, wherein the dispersion further comprises an auxiliary agent.

14. A method of improving an environment, comprising using a dispersion for environmental improvement according to any one of claim 1 to claim 13.
